# EUROPEAN PATENT APPLICATION

(11) **EP 4 579 580 A1**
(43) Date of publication of application: **02.07.2025**
(21) Application number: 24220420.4
(22) Date of filing: 17.12.2024
(51) Int. Cl.: G06T 5/73, G06T 5/60

(54) **IMAGE PROCESSING METHOD, IMAGE PROCESSING APPARATUS, IMAGE PICKUP APPARATUS, AND PROGRAM**

(30) Priority: 26.12.2023 JP 2023219164
(71) Applicant: CANON KABUSHIKI KAISHA, Tokyo 146-8501 (JP)
(72) Inventor: IDA, Yoshiaki, Tokyo (JP)
(74) Representative: WESER & Kollegen Patentanwälte PartmbB

(57) **Abstract**

An image processing method includes determining a specific region in a first image (S104), acquiring at least one second image corresponding to some of a plurality of partial images of the first image (S105), generating a third image corresponding to the second image by inputting the second image into a machine learning model (S106), and generating a fourth image based on the first image and the third image (S110), and the second image includes at least a part of the specific region.

## Description

### BACKGROUND

### Technical Field

The present disclosure relates to an image processing method, an image processing apparatus, an image pickup apparatus, and a program.

### Description of Related Art

Conventionally, a method of reducing the amount of memory usage by acquiring a plurality of divided images from an input image and performing image estimation processing for each divided image in image estimation processing using a machine learning model has been known. Japanese Patent Application Laid-Open No. 2019-212139 discloses a method of correcting a defocus image by dividing an input image and performing processing.

In some cases, only a particular area in an input image is desired to be set as a specific region for image estimation processing.

### SUMMARY

The present invention in its first aspect provides an image processing method as specified in claims 1 to 10.

The present invention in its second aspect provides an image processing apparatus as specified in claims 11 and 12.

The present invention in its third aspect provides an image pickup apparatus as specified in claim 13.

The present invention in its fourth aspect provides a program as specified in claim 14.

Further features of various embodiments of the disclosure will become apparent from the following description of exemplary embodiments with reference to the attached drawings.

### BRIEF DESCRIPTION OF THE DRAWINGS

FIG. 1 is a block diagram of an image pickup apparatus in each example.
FIG. 2 is a flowchart illustrating image processing in Example 1.
FIG. 3 illustrates the relation between a specific region and each input divided image in Example 1.
FIG. 4 is a flowchart illustrating image processing in Example 2.
FIG. 5 illustrates the relation between a specific region and each input divided image in Example 2.
FIG. 6 explains the relation between light receiving units of an image sensor and the pupil of an imaging optical system in each example.
FIG. 7 explains the relation between the light receiving units of the image sensor and an object in each example.

### DETAILED DESCRIPTION

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element,"" assembly,"" component," or "device" may also refer to "circuit" with or without integration with packaging materials.

Referring now to the accompanying drawings, a detailed description will be given of embodiments according to the disclosure. Corresponding elements in respective figures will be designated by the same reference numerals, and a duplicate description thereof will be omitted.

An image processing apparatus of the present embodiment performs sharpening processing using a machine learning model based on the optical characteristic of the optical system (imaging optical system) on an input image captured using an optical system. The optical characteristic means the aberration of the optical system or blur of the input image due to the aberration and is, for example, a point spread function (PSF) or an optical transfer function (OTF). The optical characteristic may be, for example, a modulation transfer function (MTF) that is the amplitude component of the OTF or a phase transfer function (PTF) that is the phase component of the OTF. Blur of the input image based on the characteristic of the imaging optical system can be effectively corrected by performing the sharpening processing based on the optical characteristic.

The sharpening processing of the present embodiment will be described below, along with description related to the configuration of an image pickup apparatus of each example. In the present embodiment, the sharpening processing is aberration correction processing based on the optical characteristic and is also referred to as, for example, image recovery processing or point image restoration processing. The optical characteristic may include an image pickup lens as well as an optical element such as a lowpass filter or an infrared cut filter and may take into account influence due to a structure such as the pixel array of an image sensor.

To train the machine learning model that executes the sharpening processing (image estimation processing) based on the optical characteristic of the optical system, a training image is generated by applying, to an original image corresponding to an object, blur based on an optical transfer function, with the original image used a correct image. The machine learning model may be optimized by inputting the training image to the machine learning model such as a neural network to estimate a sharpened image and minimizing the difference from the correct image. In this case, the correct image and the training image only need to have a relation with which blur due to the optical characteristic can be corrected, and conditions such as existence of noise and development processing, and resolutions may differ. In each example, the sharpening processing is performed based on the optical characteristic at the focal plane to correct blur on the focal plane, in particular.

The principle of calculation of a focus map using parallax images will be described next. The parallax images can be acquired by using an image pickup unit that guides a plurality of light beams having passed through different areas, respectively, in the pupil of one imaging optical system to different light receiving units (pixels) in one image sensor to perform photoelectric conversion. In other words, the parallax images, which are necessary for distance calculation, can be acquired with one image pickup unit (including one optical system and one image sensor).

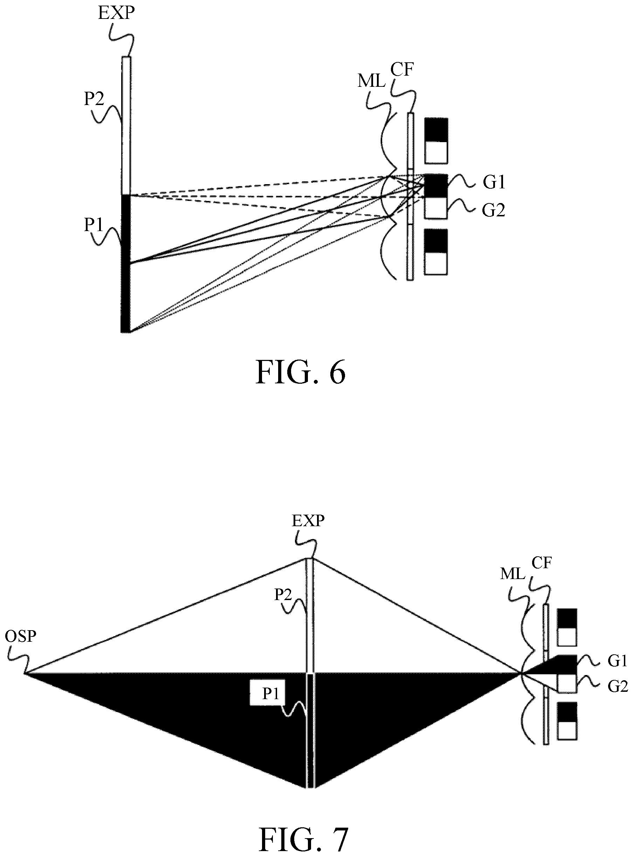

FIG. 6 illustrates the relation between the light receiving units of an image sensor and the pupil of an imaging optical system in an image pickup unit. Reference sign ML denotes micro lenses, and reference sign CF denotes color filters. Reference sign EXP denotes the exit pupil of the imaging optical system. Reference signs G1 and G2 denote light receiving units (hereinafter each referred to as pixel G1 or pixel G2) and one pixel G1 is paired with one pixel G2. In the image sensor, a plurality of pairs (pixel pairs) of pixels G1 and G2 are arrayed. Each pair of pixels G1 and G2 has an approximately conjugate relation with the exit pupil EXP through a shared micro lens ML (one provided for each pixel pair). A plurality of pixels G1 arrayed in the image sensor are also collectively referred to as a pixel group G1, and a plurality of pixels G2 arrayed in the image sensor are also collectively referred to as a pixel group G2.

FIG. 7 explains the relation between the light receiving units of the image sensor and an object, schematically illustrating an image pickup system in a case where it is assumed that a thin lens is disposed at the position of the exit pupil EXP in FIG. 6. Each pixel G1 receives a light beam having passed through an area P1 of the exit pupil EXP, and each pixel G2 receives a light beam having passed through an area P2 of the exit pupil EXP. Reference sign OSP is an object point being imaged. No physical body (object) needs to present at the object point OSP, and a light beam having passed through the point is incident on the pixel G1 or the pixel G2 depending on an area (position) in the pupil through which the light beam passes. Passage of light beams through areas different from each other in the pupil corresponds to separation of incident light from the object point OSP based on an angle (parallax). Accordingly, among pixels G1 and G2 provided for each micro lens ML, an image generated by using an output signal from the pixel G1 and an image generated by using an output signal from the pixel G2 become a plurality (in this example, pair) of parallax images having a parallax therebetween.

In the following description, reception of light beams having passed through areas different from each other in the pupil by light receiving units (pixels) different from each other is also referred to as pupil division. In this example, a description is made on pupil division in one pupil dividing direction, but the number of pupil dividing directions and the number of divisions are optional, and for example, division may be made in two directions of the horizontal direction and the vertical direction. Alternatively, the number of pupil dividing directions and the number of divisions may be different in accordance with a pixel position in the image sensor. A parallax direction in pupil division is a positional shift direction when each divided pupil is regarded as a viewpoint. A viewpoint position is defined based on a pupil area through which each light beam passes, and may be, for example, the barycenter position of the light beam. The pupil dividing directions are not limited to the horizontal direction and the vertical direction but may be oblique directions.

In FIGs. 6 and 7, even when the above-described conjugate relation becomes incomplete due to, for example, shift of the position of the exit pupil EXP or even when the areas P1 and P2 partially overlap each other, a plurality of obtained images can be used as parallax images.

A positional shift amount (parallax shift amount) of the object between parallax images can be calculated by specifying corresponding object areas in the parallax images. Various kinds of methods can be used to specify identical object areas in images. For example, a block matching method using one of the parallax images as a reference image may be used. Accordingly, the parallax shift amount can be acquired. In each example, the parallax shift amount is considered with the focal plane as a reference. The distance (defocus amount) from the image sensor to the focal point of an imaging optical system can be calculated based on the parallax shift amount and the positional shift amount (base length) of a viewpoint. In addition, object distance can be calculated by using the focal length of the imaging optical system.

Acquisition of the parallax shift amount, the defocus amount, and the object distance is not limited to the above-described methods, but for example, the defocus amount may be acquired directly from parallax images by machine learning. The parallax images may be acquired by a plurality of image pickup apparatuses. The parallax shift amount and the defocus amount are signed quantities that can take positive or negative values. In a case where the parallax shift amount or the defocus amount is smaller than a predetermined value, it can be considered in focus, and a map indicating in-focus object areas is referred to as a focus map.

Each example will be described in detail below.

### EXAMPLE 1

In the present example, image estimation processing that outputs an image by inputting an image into the machine learning model is performed. The input image is divided into blocks to generate a plurality of divided images, and the image estimation processing is performed by inputting each divided image to the machine learning model. To correct blur on the focal plane, the sharpening processing is applied to the input image by using the machine learning model trained based on the optical characteristic of the focal plane. Since the sharpening processing is applied only at the focal plane, only necessary areas are input to the machine learning model based on the focus map indicating the focal plane.

However, input specifications of the machine learning model are determined by the architecture of the model, learning data, software implementation, or image processing circuit implementation, and thus division need be performed to satisfy the input specifications. For example, the specifications include the positions and shapes of divisions of the input image, the number of overlapping pixels of divided images, and the number and pixel value range of pixels of divided images. In particular, since the positions and shapes of divisions of the input image are determined as specifications, the accuracy can be improved in processing only a processing target area by being inputted to the machine learning model in accordance with the processing target area.

Thus, from among divided areas (partial images) in a case where division is performed to satisfy the specifications of the machine learning model, any divided image (input divided image) to be input to the machine learning model is acquired based on whether the divided image includes an area to be a processing target. The divided areas are each an area that can be acquired as an input divided image (partial image) in the image estimation processing with the machine learning model. When all divided areas are acquired as input divided images, the processing load (calculation load) is large. According to the present example, it is possible to reduce the processing load since some divided areas are not acquired as input divided images.

The input divided images can include an area not to be a processing target. Thus, after inputting into the machine learning model, influence of the image estimation processing on the area is reduced or removed. Even when data representing an area to be a processing target is input to the machine learning model together with the input image, generally, it is possible that the machine learning model may be trained to reduce influence of the image estimation processing as intended since the machine learning model is not rule-based processing. Thus, as post-processing, processing that reduces or removes influence of the image estimation processing is performed on an output from the machine learning model.

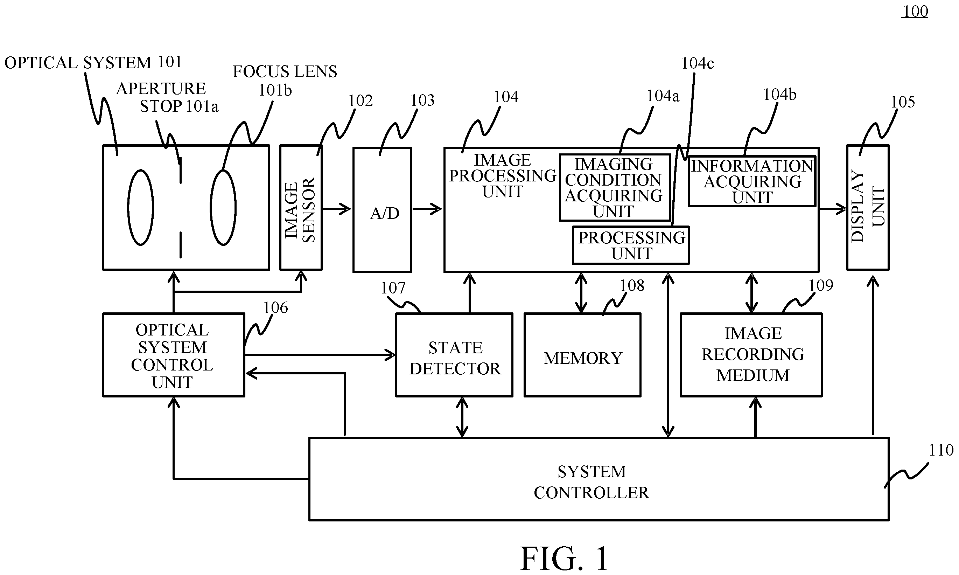

The configuration of an image pickup apparatus of the present example will be described below with reference to FIG. 1. An image pickup apparatus 100 of the present embodiment will be described below with reference to FIG. 1. FIG. 1 is a block diagram illustrating the configuration of the image pickup apparatus 100. An image processing program for performing the sharpening processing of the present example is installed on the image pickup apparatus 100. The sharpening processing of the present embodiment is executed by an image processing unit (image processing apparatus) 104 inside the image pickup apparatus 100.

The image pickup apparatus 100 includes an optical system (imaging optical system) 101 and an image pickup apparatus body (camera body). The optical system 101 includes an aperture stop 101a and a focus lens 101b and is integrated with the camera body. However, the present disclosure is not limited thereto but is also applicable to an image pickup apparatus in which the optical system 101 is detachably mounted on the camera body. The optical system 101 may include an optical element having a diffractive surface, an optical element having a reflective surface, or the like in addition to an optical element having a refractive surface, such as a lens.

An image sensor 102 includes a charge coupled device (CCD) sensor or a complementary metal oxide semiconductor (CMOS) sensor. The image sensor 102 generates (outputs) a captured image (image data) by photoelectrically converting an object image formed through the optical system 101 (optical image imaged through the optical system 101). Specifically, the object image is converted into an analog signal (electric signal) through photoelectric conversion by the image sensor 102. An A/D converter 103 converts the analog signal input from the image sensor 102 into a digital signal and outputs the digital signal to the image processing unit 104.

The image processing unit 104 performs predetermined processing on the digital signal and also performs the sharpening processing of the present example. The image processing unit 104 includes an imaging condition acquiring unit 104a, an information acquiring unit 104b, and a processing unit 104c. The imaging condition acquiring unit 104a acquires an imaging condition of the image pickup apparatus 100 from a state detector 107. The imaging condition includes, for example, the aperture value (F-number), the image pickup distance (focus position), and the focal length of a zoom lens. The state detector 107 may acquire the imaging condition directly from a system controller 110 or may acquire the imaging condition from an optical system control unit 106.

The machine learning model that performs the sharpening processing can perform aberration correction processing that corrects blur due to the optical characteristic of the focal plane, by training with learning data generated based on the optical transfer function. Parameters of the machine learning model are held in a memory 108. The memory 108 is constituted by, for example, a read only memory (ROM). An output image processed by the image processing unit 104 is stored in a predetermined format in an image recording medium 109. A display unit 105 constituted by a liquid crystal monitor or an organic EL display and displays an image obtained by performing predetermined display processing on an image subjected to the sharpening processing. However, the image displayed on the display unit 105 is not limited thereto, but an image subjected to simplified processing for high-speed display may be displayed on the display unit 105.

The system controller 110 controls the image pickup apparatus 100. Mechanical drive of the optical system 101 is performed by the optical system control unit 106 based on an instruction from the system controller 110. The optical system control unit 106 controls the opening diameter of the aperture stop 101a to achieve a predetermined F number. To perform focusing in accordance with the object distance, the optical system control unit 106 controls the position of the focus lens 101b by using a non-illustrated autofocus (AF) mechanism or manual focus mechanism. Functions for control of the opening diameter of the aperture stop 101a, manual focusing, and the like do not necessarily need to be executed in accordance with the specifications of the image pickup apparatus 100.

An optical element such as a lowpass filter or an infrared cut filter may be disposed between the optical system 101 and the image sensor 102, but when using an element that affects an optical characteristic, such as a lowpass filter, consideration may be needed at production of a sharpening filter. Regarding an infrared cut filter, it affects the OTF of each RGB channel, which is the integral value of a spectral wavelength optical transfer function (OTF), particularly, the OTF of the R channel, and thus consideration may be need at production of a sharpening filter. Accordingly, sharpening filters may be changed in accordance with existence of a lowpass filter or an infrared cut filter.

The image processing unit 104 is constituted by an ASIC, and the optical system control unit 106, the state detector 107, and the system controller 110 are each constituted by a CPU or an MPU. One or more of the image processing unit 104, the optical system control unit 106, the state detector 107, and the system controller 110 may be constituted by the same CPU or MPU.

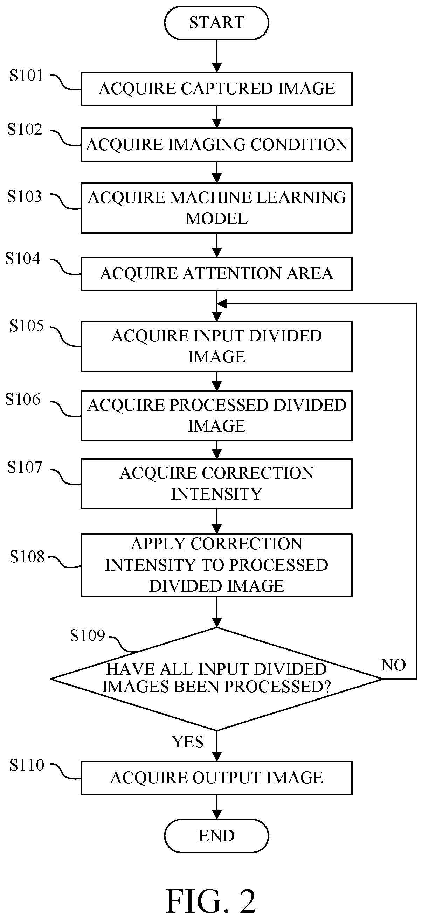

An image processing method performed by the image processing unit 104 of the present example will be described below with reference to FIG. 2. FIG. 2 is a flowchart illustrating the image processing method of the present example. The image processing method of the present example is executed based on instructions from the image processing unit 104. The sharpening processing illustrated in FIG. 2 can be embodied as a computer program for causing a computer to execute the function of each step. The same applies to the following flowcharts.

First at step S101, the information acquiring unit 104b acquires, as an input image (first image), an image (captured image) picked up by the image pickup apparatus 100. The input image is stored in the memory 108. Alternatively, the information acquiring unit 104b may acquire, as the input image, an image stored in the image recording medium 109.

Subsequently at step S102, the imaging condition acquiring unit 104a acquires an imaging condition at image pickup of the input image. The imaging condition includes the focal length of the optical system 101, the aperture value (F value), and image pickup distance determined for an in-focus object. In a case of an image pickup apparatus in which a lens is detachably mounted on a camera body, the imaging condition further includes the lens ID and the camera ID. The imaging condition may be directly acquired from the image pickup apparatus or may be acquired from information (for example, EXIF information) associated with the input image.

Subsequently at S103, the information acquiring unit 104b acquires a machine learning model that performs the sharpening processing from the memory 108 based on the optical characteristic of the optical system 101. The machine learning model of the present example includes processing through a neural network. Since the optical characteristic differ depending on the imaging condition and the angle of view, information regarding the imaging condition and the angle of view may be additionally input to the machine learning model, and different machine learning models may be used in accordance with the imaging condition and the angle of view. The optical characteristic that is used for the sharpening processing are acquired based on the image pickup distance (distance to the in-focus position) as the imaging condition, in particular. The optical characteristic is an optical characteristic when an object separated by the image pickup distance and located on a plane orthogonal to the optical axis is focused on the axis.

Subsequently at step S104, the information acquiring unit (determination unit) 104b acquires a specific region (region of interest) as the target of the sharpening processing. In other words, the information acquiring unit 104b determines the specific region from the captured image. In the present example, the specific region is acquired as a two-dimensional map based on the focus map. Specifically, the focus map acquired by the above-described method is acquired at the same resolution as the input image, and an object area indicated as in-focus on the focus map is set as the specific region. This is because the sharpening processing may be performed in an in-focus area since the processing is based on the optical characteristic of the focal plane. An out-of-focus area is blurred by defocus and thus does not need to be sharpened. In the out-of-focus area, the object distance is different from the distance corresponding to the optical characteristic that is used in training of the machine learning model, resulting in blur with different the optical characteristic.

Blur in the out-of-focus area and blur assumed by the machine learning model are different from each other. Accordingly, the sharpening processing may cause adverse effects such as excessive correction and emphasis of defocus blur around contours. Thus, under image capturing conditions where such adverse effects occur, it is better not to apply the sharpening processing to the out-of-focus area. The focus map does not need to have the same resolution as the input image. After acquired at low resolution, the focus map may be upscaled to the same resolution as the input image.

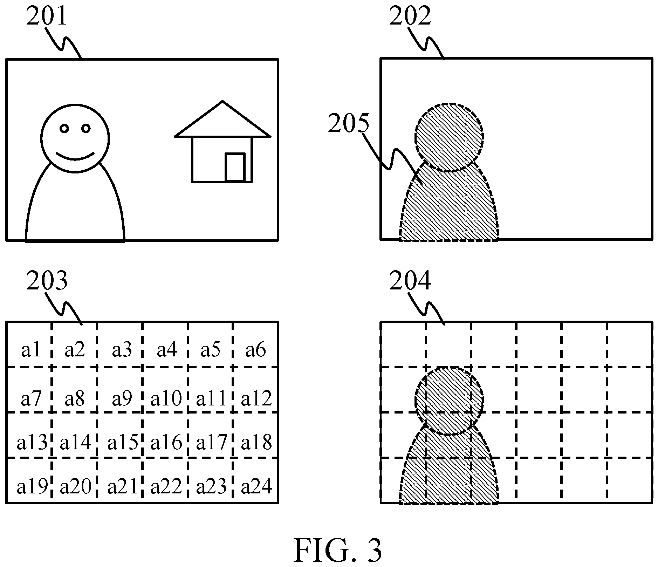

Subsequently at step S105, the information acquiring unit (first acquisition unit) 104b acquires, from among a plurality of divided areas obtained by dividing the input image, one input divided image (second image) to be input to the machine learning model. Specifically, the information acquiring unit 104b acquires at least one input divided image (one or more input divided images) corresponding to only a portion of (or some of) a plurality of partial images of the captured image. A method of acquiring input divided images will be described below in detail with reference to FIG. 3. FIG. 3 illustrates the relation between the specific region and each input divided image in the present example.

Reference sign 201 denotes the input image, reference sign 202 denotes the two-dimensional map acquired at step S104 in FIG. 2, and a specific region 205 is hatched. Reference sign 203 denotes a plurality of divided images obtained by dividing the input image 201 into blocks, and the divided images are indicated as partial areas a1 to a24. Division positions of the divided images 203 are illustrated with dashed lines, and the partial areas surrounded by the dashed lines correspond to respective acquisition areas when acquired as the divided images. The division positions and division sizes of the divided images are implemented in the image processing unit 104 as an ASIC in advance. Reference sign 204 denotes an image illustrating the specific region 205 and the division positions of the divided images 203 in a superimposed manner.

In the image 204, the partial areas a14 and a20 are included inside the specific region 205, and the entirety of the partial areas a14 and a20 is the target of the sharpening processing. The partial areas a7 to a9, a13, a15, a19, and a21 partially overlap the specific region 205 (include a first area and a second area, the first area including the specific region, the second area not including the specific region), and only part of each partial area is the target of the sharpening processing. The machine learning model processes input on a block-by-block basis. Accordingly, input targets as input divided images are the partial areas a7 to a9, a13 to a15, and a19 to a21, and one of the partial areas a7 to a9, a13 to a15, and a19 to a21 is acquired at step S105 in FIG. 2. In other words, a partial area included in the specific region 205 or a partial area partially overlapping the specific region 205 needs to be acquired as an input divided image.

Divided areas that are not used as input divided images (divided areas not including the specific region 205) have their division positions and division sizes defined but do not need to be acquired as images. It is sufficient if the specific region 205 is processed by using the machine learning model, and not all partial areas that are either included in the specific region 205 or partially overlap the specific region 205 need to be acquired as input divided images. This is because, in a case where partial areas overlap, even if a certain partial area overlapping the specific region is not input to the machine learning model, the entire specific region can be input to the machine learning model by inputting other partial areas to the machine learning model.

Subsequently at step S106 in FIG. 2, the processing unit (first generation unit) 104c inputs the input divided image acquired at step S105 to the machine learning model acquired at step S103 and generates a processed divided image (third image corresponding to the input divided image) subjected to the sharpening processing. In a case where a partial area that partially overlaps the specific region is acquired as the input divided image, the processed divided image includes an area that is not included in the specific region.

Subsequently at step S107, the information acquiring unit 104b acquires, from the memory 108, correction intensity applied to the processed divided image. In the present example, the correction intensity (first intensity) for pixels included in the specific region (an area corresponding to the first area) is one, and the correction intensity (second intensity) for pixels not included in the specific region (an area corresponding to the second area) is zero. To provide spatial continuity to the correction intensity, the first intensity for pixels included in the specific region may be smaller than one and the second intensity for pixels not included in the specific region may be larger than zero. To ensure continuity at the boundary of the specific region, the correction intensity may gradually be reduced toward the non-specific region near the boundary. In this case, the correction intensity is acquired as a two-dimensional map corresponding to pixel positions of the processed image. Instead of being acquired as a two-dimensional map, the correction intensity may be acquired a scalar value based on whether the correction intensity is in the specific region. In this case, the correction intensity does not need to be acquired again when step S107 is executed.

Subsequently at step S108, the correction intensity of the sharpening processing is reflected by taking the weighted average of the processed target image and each input divided image (combining the processed target image and each input divided image) in accordance with the correction intensity. The weighted average may not be taken in a case where the correction intensity is one, or replacement with the input divided image may be performed when the correction intensity is zero. In a case where the correction intensity is one for all pixels of the processed divided image, no processing is performed and the process proceeds to step S109.

Subsequently at step S109, the processing unit 104c determines whether all partial areas to be set as input divided images have been processed. In a case where processing of all input divided images (partial areas) is not completed, the process returns to step S105 to acquire an unprocessed partial area as an input divided image and execute steps S 106 to S 108 in the same way. In a case where processing of all input divided images (partial areas) is completed, the process proceeds to step S 110.

At step S 110, the processing unit (second generation unit) 104c disposes the processed divided images in the positional relation before division and generates a connected (combined) output image (fourth image). In other words, the processing unit 104c generates the output image through processing based on the processed divided images and the specific region. When overlapping each other, divided areas may be extracted to avoid overlapping or may be connected by taking the weighted average of their overlapping parts. Accordingly, the entire image processing in the present example is completed.

As described above, the input divided images in the present example include the first area including the specific region and the second area not including the specific region. In areas corresponding to the first area in the processed divided images, pixel values are changed by setting the processing intensity of the machine learning model to the first intensity. In areas corresponding to the second area in the processed divided images, pixel values are changed by setting the processing intensity to the second intensity smaller than the first intensity. Then, the output image is acquired by using areas where the first intensity is applied and areas where the second intensity is applied in the processed divided images.

The processing order of the present example may be changed as appropriate. The image capturing condition acquisition at step S 102 and the machine learning model acquisition at step S 103 each only need to be executed until the machine learning model is used at step S106. In a case where different machine learning models are used for respective input divided images, a plurality of machine learning models may be acquired at step S 103 or a necessary machine learning model may be acquired as needed each time.

The correction intensity acquisition at step S107 only needs to be performed before its application at step S108. In the present example, the correction intensity is acquired for each input divided image, but it may be acquired for the entire picked-up image and its portion corresponding to each input divided image may be extracted and used. The correction intensity application at step S108 only needs to be reflected on the output image and may be performed after the processed divided images are connected at step S110. In this case, the correction intensity can be applied by taking the weighted average of the output image and the input image instead of taking the weighted average of the processed target image and each input divided image. In other words, the processed divided images or the output image in the present example is acquired by changing pixel values based on the specific region.

In the present example, the information acquiring unit 104b acquires the machine learning model and the correction intensity from the memory 108 of the image pickup apparatus 100, but the present invention is not limited thereto. For example, in a case of an image pickup apparatus in which the optical system 101 is detachably mounted on the camera body, the information acquiring unit 104b may acquire, through communication with the image pickup apparatus, optical characteristic and correction intensities stored in a memory in a lens apparatus including the optical system 101. In this case, the lens apparatus (optical system 101) includes a non-illustrated memory that stores optical characteristic and correction intensity, and a non-illustrated communication unit that transmits optical characteristic and correction intensity to the camera body.

The machine learning model and the correction intensity may be held in a server in advance instead of being stored in a memory in an image pickup apparatus or a lens apparatus. In this case, the machine learning model and the correction intensity can be downloaded to the image pickup apparatus or the lens apparatus through communication as necessary.

In the present example, the correction intensity is acquired from the memory 108, but an index value such as the defocus amount or the object distance may be acquired from the memory 108 and then converted into the correction intensity. Accordingly, in a case where the image pickup apparatus, the optical system, or image capturing conditions are different, different correction intensities can be obtained with the same index value. The index value may be information regarding the specific region.

In the present example, the correction intensity is applied by taking the weighted average of the processed target image and each input divided image, but the correction intensity application is not limited to. Various modifications are possible, such as applying blurring processing again to an image to which the sharpening processing is applied.

The input image may be outputted from the image pickup apparatus to an image processing apparatus provided separately from the image pickup apparatus and may be subjected to image processing by the image processing apparatus. In this case, imaging condition information and information regarding each specific region may directly or indirectly be handed over from the image pickup apparatus to the image processing apparatus through communication. In the case of handover through communication, whether each information is associated with the input image can be selected as appropriate.

In the present example, the image estimation processing applied to the input image is sharpening processing, but the present invention is not limited thereto, any other image processing may be applied as long as the processing is to be applied only to a predetermined specific region. For example, the output image may be an image obtained by applying defocus blur conversion or resolution enhancement to the input image.

The defocus blur conversion is processing that changes luminance distribution of a blurred image by controlling the optical characteristic of a defocus area. The defocus blur conversion includes, for example, changing the size and shape of blur, converting a uniform blurred image through an ideal optical system and a blurred image in which light quantity decreases toward a peripheral part, and controlling change of a blurred image with the defocus amount.

In a case where the defocus blur conversion is applied, the out-of-focus area is the specific region, and thus the out-of-focus area may be set as the specific region based on the focus map. Since only blur with a predetermined defocus amount is changed, the specific region may be determined based on a defocus map. In a case where the resolution enhancement is applied, only the in-focus area may be set as the specific region based on the focus map. In defocus areas and other areas do not contain high-frequency wave components, highly accurate resolution enhancement using a machine learning model has little effect and it is sufficient to perform the resolution enhancement by a well-known method such as bicubic interpolation. As described above, the image estimation processing may be processing that changes a frequency characteristic of the input image.

The effect of the processing that changes a frequency characteristic of the input image change depending on the frequency characteristic of the input image and the optical characteristic of the image pickup apparatus having picked up the input image, and thus it is possible to efficiently reduce the processing load by setting a target area in accordance with the effect. The processing that changes the frequency characteristic of the input image may include convolve processing, which is processing equivalent to multiplication of the frequency component by gain.

In the present example, the specific region is determined based on the focus map, but may be determined based on any other information regarding distance. For example, the determination may be based on a defocus map corresponding to distance on the image side of the optical system, or a parallax shift amount map corresponding to the defocus map. The information regarding distance may be a depth map corresponding to distance on the object side. For example, the specific region can be determined by selecting a range in which these pieces of distance information are constant irrespective of focusing. The specific region in the present example may be determined by using semantic area division information (such as information indicating a person). The sharpening and resolution enhancement may be applied only to a main object, for example, a person, as the specific region, and an area excluding specific objects such as typically low-contrast areas like sky may be set as the specific region.

In the present example, the specific region may be determined based on cropping information (information indicating a cropped area). Cropping is processing that extracts only a predetermined range of an image and is processing that acquires, as a record image, a predetermined range of an output from an image pickup sensor at image pickup, or processing that acquires only a predetermined range of the input image at image processing. In a case where the image estimation processing is executed for the input image to be cropped, with the knowledge that cropping will be performed, the processing load can be reduced by setting the cropped area as the specific region.

In the present example, the specific region may be determined based on image circle information regarding the imaging optical system. For example, an image picked up by using a full-circle fisheye lens includes areas not imaged depending on the optical system. In other words, the image picked up includes areas outside the image circle. Thus, the specific region may be set to be only an area in the image circle, for example.

In the present example, the specific region may be acquired based on optical performance. For example, an area where the optical performance is particularly low in the sharpening may be set as the specific region, an area where the optical performance is high in the resolution enhancement and highly accurate estimation processing using a machine learning model is effective may be set as the specific region. In the defocus blur conversion, a blurred image with blur that a user does not find desirable may be set as the specific region. Examples of a case where blur is undesirable include a case of distribution with larger luminance at a peripheral part, but the luminance distribution of a blurred image is determined based on an optical characteristic. In other words, only an area where image capturing conditions of an optical characteristic and the angle of view result in such a blurred image may be set as the specific region. The specific region may be set based on a plurality of pieces of the above-described information. For example, only an in-focus area in the cropped area may be set as the specific region.

In the present example, the specific region may be determined based on the content of the input image. In a case where the specific region is determined based on the content of the input image, the processing load can efficiently be reduced based on information not determined in advance like before image pickup or before image processing. Moreover, by using the image processing method that sets the specific region based on the content of the input image, the image estimation processing with a low processing load can be performed without the necessity to implement software or an image processing circuit to be able to perform image division in accordance with the input image. Accordingly, implementation costs can be reduced. The content means an object an image of which is picked up.

In the present example, the specific region may be determined based on setting (changeable image processing setting or image pickup setting) that is changeable at image processing or image pickup. The determination is based on, for example, the cropped area or any other area designated as an image processing target by the user. Alternatively, the determination may be based on focus information at image capturing. These settings are not unique to the device but are based on post conditions such as user designation and an image capturing method. The processing load can efficiently be reduced in accordance with the settings by acquiring the specific region based on the changeable settings.

Divided areas may be obtained by division irrespective of the content of the input image, such as equally dividing the input image. In other words, divided areas may be not divided with designation of the area of an attention object. As described above, implementation costs for software or an image processing circuit can be reduced.

Divided areas may be coarser than the resolution of one pixel in the specific region. In other words, an area in the first image corresponding to one pixel in information (for example, the focus map) used to determine the specific region is smaller than a partial image. Processing speed can be improved by increasing the size of each partial image input to the machine learning model. Moreover, by setting the specific region finer than a divided area, it is possible to perform post-processing corresponding to the fine structure of the object in a case where each divided area is large, thereby increasing the quality of the output image after image processing.

The processing intensity of the machine learning model for each processed divided image or the output image may be set so that pixel values are changed to be smaller in areas not included in the specific region than in areas included in the specific region. In other words, each processed divided image or the output image may be acquired by changing pixel values so that the processing intensity of the machine learning model for areas not included in the specific region is smaller than the processing intensity of the machine learning model for areas included in the specific region. By reducing the correction intensity for areas other than the specific region as described above, it is possible to perform the image estimation processing with priority on the specific region. The correction intensity for the specific region only needs to be statistically larger than the correction intensity for the non-specific region, and an area with smaller correction intensity than that for the non-specific region may exist in the specific region.

In the present example, the sharpening processing is applied to the captured image, but the target of the image estimation processing only needs to be a map having two-dimensional pixel values that can be expressed as an image. The target may be, for example, a depth map or CG. Divided areas may be uniformly divided areas. Accordingly, input data with uniform size can be input to the machine learning model.

In the present example, divided areas do not overlap, but may overlap each other. In the present example, an image is a two-dimensional image. Divided areas may be quadrilateral since they are input to the machine learning model involving convolution or the like. Division may be performed in blocks in two-dimensional directions of the horizontal and vertical directions. The present example is also applicable to a motion image. In the motion image, one specific region may commonly be used for frames at different time points, or different specific regions may be used for respective frames.

### EXAMPLE 2

The image pickup apparatus in Example 2 of the present disclosure will be described below. In the present example, resolution enhancement processing is performed by using the specific region that is set based on the cropped area. The same block diagram as in Example 1 applies to the image pickup apparatus 100 in the present example.

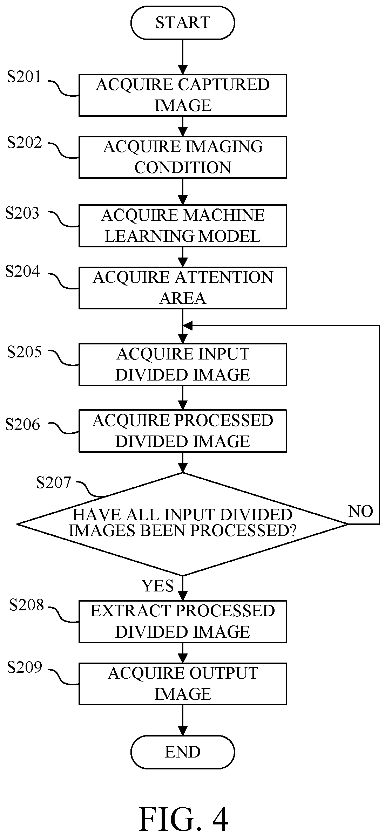

Sharpening processing in the present example will be described below with reference to FIG. 4. FIG. 4 is a flowchart of the sharpening processing (image estimation processing) in the present example. Steps S201 and S202 in FIG. 4 are the same as steps S101 and S102, respectively, in FIG. 2 described above in Example 1. At step S203, unlike step S103, the information acquiring unit 104b acquires a machine learning model that performs the resolution enhancement processing.

Subsequently at step S204, the information acquiring unit 104b acquires the specific region as the target of the resolution enhancement processing. In the present example, image cropping processing is performed in addition to the resolution enhancement processing. Only areas included in the remaining area (cropped area) after the cropping processing are need as the output image, and thus the cropped area is set as the specific region.

In the present example, the cropping processing and the resolution enhancement processing are applied to an image stored in the memory 108 after image pickup, but the present invention is not limited thereto. For example, a predetermined area may be designated as the cropped area at image capturing, and the resolution enhancement processing may be applied simultaneously with image pickup. The cropped area does not necessarily need to be acquired as a two-dimensional map, but only the coordinates of the four corners of a quadrilateral area may be acquired. The cropped area may be designated by the user or may automatically be set based on a designated zoom magnification. Alternatively, the cropped area may automatically be set based on an object.

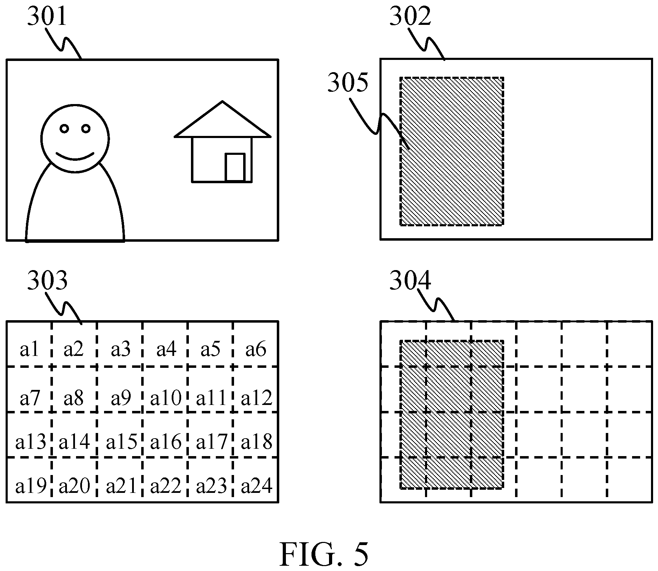

Subsequently at step S205, similarly to step S105, the information acquiring unit 104b acquires an input divided image based on the specific region. FIG. 5 illustrates the relation between the specific region and each input divided image in the present example.

In FIG. 5, reference sign 301 denotes the input image, and the hatched part of an image 302 is the specific region acquired at step S204, which is denoted by 305. Reference sign 303 denotes the divided images, and the division positions and partial areas of the divided images 303 are illustrated with dashed lines. Reference sign 304 denotes an image obtained by superimposing the specific region 305 and the divided images 303. Areas needed to be acquired as input divided images are partial areas included in the specific region 305 or partial areas partially overlapping the specific region 305, in other words, the partial areas a1 to a3, a7 to a9, a13 to a15, and a19 to a21. Among these partial areas, one partial area for which the image estimation processing is yet to be applied is acquired as an input divided image.

Subsequently at step S206 in FIG. 4, the processing unit 104c inputs the input divided image acquired at step S205 to the machine learning model acquired at step S203 and acquires a processed divided image to which the resolution enhancement processing is applied. In a case where a partial area that partially overlaps the specific region is acquired as the input divided image, the processed divided image includes an area that is not included in the specific region.

Subsequently at step S207, the processing unit 104c determines whether processing of all partial areas to be set as input divided images is completed. In a case where processing of all partial areas to be set is not completed, the process returns to step S205 to acquire an unprocessed partial area as an input divided image and execute step S206 in the same way. In a case where processing of all partial areas to be set is completed, the process proceeds to step S208.

At step S208, the processing unit 104c performs extraction (changes the number of pixels) for the processed divided images obtained by processing partial areas that partially overlaps the specific region. Specifically, areas not included in the hatched part (specific region 305) in the image 304 illustrated in FIG. 5 are deleted from the partial areas a1 to a3, a7, a9, a13, a15, and a19 to a21. The partial areas included in the specific region 305 do not include areas that are not the specific region, and thus do not need to be subjected to extraction processing.

Subsequently at step S209, the processing unit 104c disposes the processed divided image in the positional relation before division and acquires a connected output image. Accordingly, the output image in which only the specific region in the input image is provided with resolution enhancement is acquired, which completes the entire image processing in the present example. The order of steps S208 and S209 may be opposite, and only the specific region may be extracted from the connected output image. Steps S208 and S209 may simultaneously be processed. In other words, in the processed divided images, only pixels included in the specific region may be referred to generate the output image. In this case, the output image is based on only areas included in the specific region, in the processed divided images. In this manner, the processed divided images or the output image in the present example is acquired by changing the number of pixels based on the specific region.

### OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disc (such as a compact disc (CD), digital versatile disc (DVD), or Blu-ray Disc (BD)^{™}), a flash memory device, a memory card, and the like.

While the disclosure has described example embodiments, it is to be understood that the disclosure is not limited to the example embodiments. The scope of the following claims is to be accorded the broadest interpretation so as to encompass all such modifications and equivalent structures and functions.

Each example can provide an image processing method that can reduce the processing load in image estimation processing using a machine learning model.

## Claims

1. An image processing method comprising:
determining a specific region in a first image (S104);
acquiring at least one second image corresponding to some of a plurality of partial images of the first image (S105);
generating a third image corresponding to the second image by inputting the second image into a machine learning model (S106); and
generating a fourth image based on the first image and the third image (S110),
**characterized in that** the second image includes at least a part of the specific region.

2. An image processing method comprising:
determining a specific region in a first image (S104);
acquiring a second image corresponding to the specific region (S105);
generating a third image corresponding to the second image by inputting the second image into a machine learning model (S106);
generating a fourth image based on the first image and the third image (S110),
**characterized in that** the specific region is determined based on at least one of information regarding a distance corresponding to the first image, semantic area division information, cropping information, image circle information, and an optical performance.

3. The image processing method according to claim 1 or 2, **characterized in that** the specific region is determined based on at least one of information regarding a distance corresponding to the first image, semantic area division information, cropping information, image circle information, and an optical performance.

4. The image processing method according to any one of claims 1 to 3, **characterized in that** the specific region is determined based on at least one of a content of the first image, changeable image processing setting, and changeable image pickup setting.

5. The image processing method according to claim 3, **characterized in that** the information regarding the distance includes a focus map.

6. The image processing method according to any one of claims 1 to 5, **characterized in that** the plurality of partial images are acquired by equally dividing the first image.

7. The image processing method according to any one of claims 1 to 6, **characterized in that** the fourth image is an image based only on an area included in the specific region in the third image.

8. The image processing method according to any one of claims 1 to 7, **characterized in that** the third image or the fourth image is generated by processing such that processing intensity of the machine learning model for an area not included in the specific region is lower than processing intensity of the machine learning model for an area included in the specific region.

9. The image processing method according to any one of claims 1 to 8, **characterized in that**:
the second image includes a first area and a second area, the first area including the specific region, the second area not including the specific region,
processing intensity of the machine learning model for an area corresponding to the first area in the third image is set to first intensity,
the processing intensity for an area corresponding to the second area in the third image is set to second intensity smaller than the first intensity, and
the fourth image is generated by using the area set to the first intensity and the area set to the second intensity in the third image.

10. The image processing method according to any one of claims 1 to 9, **characterized in that** the fourth image is an image obtained by applying at least one of sharpening, resolution enhancement, and defocus blur conversion to the first image.

11. An image processing apparatus (104) comprising:
a determination unit (104b) configured to determine a specific region in a first image;
an acquisition unit (104b) configured to acquire at least one second image corresponding to some of a plurality of partial images of the first image;
a first generation unit (104c) configured to generate a third image corresponding to the second image by inputting the second image into a machine learning model; and
a second generation unit (104c) configured to generate a fourth image based on the first image and the third image,
**characterized in that** the second image includes at least a part of the specific region.

12. An image processing apparatus comprising:
a determination unit (104b) configured to determine a specific region in a first image;
an acquisition unit (104b) configured to acquire a second image corresponding to the specific region;
a first generation unit (104c) configured to generate a third image corresponding to the second image by inputting the second image into a machine learning model;
a second generation unit (104c) configured to generate a fourth image based on the first image and the third image,
**characterized in that** the specific region is determined based on at least one of information regarding a distance corresponding to the first image, semantic area division information, cropping information, image circle information, and an optical performance.

13. An image pickup apparatus (100) comprising:
the image processing apparatus (104) according to claim 11 or 12; and
an image sensor (102).

14. A program that causes a computer to execute the image processing method according to any one of claims 1 to 10.
